Europäisches Patentamt

European Patent Office

Office européen des brevets

(11) Veröffentlichungsnummer: **0 305 806 B1**

# (12) EUROPÄISCHE PATENTSCHRIFT

(45) Veröffentlichungstag der Patentschrift: **13.11.91**

(51) Int. Cl.⁵: **A01F 15/04**

(21) Anmeldenummer: **88113337.5**

(22) Anmeldetag: **17.08.88**

(54) **Ballenpresse.**

(30) Priorität: **03.09.87 DE 3729479**

(43) Veröffentlichungstag der Anmeldung:
**08.03.89 Patentblatt 89/10**

(45) Bekanntmachung des Hinweises auf die
Patenterteilung:
**13.11.91 Patentblatt 91/46**

(84) Benannte Vertragsstaaten:
**BE CH DE FR GB IT LI NL**

(56) Entgegenhaltungen:
**DE-A- 3 021 506**
**DE-C- 725 500**
**FR-A- 1 278 888**
**GB-A- 813 393**
**US-A- 3 249 040**

(73) Patentinhaber: **GREENLAND GMBH & CO. KG**
**Erwin-Dietrich-Platz 1**
**W-7702 Gottmadingen(DE)**

(72) Erfinder: **Silber, Wilhelm**
**Petersburg 21**
**W-7702 Gottmadingen(DE)**
Erfinder: **Schaible, Siegfried**
**Breslauerstrasse 15**
**W-7700 Singen(DE)**
Erfinder: **Schweizer, Robert**
**Feldbergstrasse 14**
**W-7709 Hilzingen/Riedheim(DE)**

(74) Vertreter: **Patentanwälte Grünecker, Kinkel-**
**dey, Stockmair & Partner**
**Maximilianstrasse 58**
**W-8000 München 22(DE)**

## Beschreibung

Die Erfindung betrifft eine Ballenpresse nach dem Oberbegriff des Patentanspruches 1.

Aus der FR-A-25 44 164 ist eine Ballenpresse bekannt, bei welcher das von einem Aufsammler aufgenommene und geschnittene Erntegut über einen anschließenden Rotationsförderer in einem Zuführkanal über eine Einfüllöffnung von unten in einen Preßkanal eingebracht wird.

Das so in den Preßkanal eingeschobene Gut wird mittels eines im Preßkanal hin- und hergehenden Preßkolbens nach hinten verschoben und weiter verdichtet. Dieser Vorgang wird mehrmals wiederholt, bis ein Ballen von gewünschter Länge im Preßkanal entstanden ist, der anschließend über eine Bindevorrichtung gebunden und nach hinten ausgestoßen wird.

Die Hin- und Herbewegung des Preßkolbens erfolgt durch einen Kurbelantrieb, der im vorderen Bereich vor dem Kolben angeordnet ist. Der Antrieb der Kurbelwelle erfolgt über zwei Kettentriebe von einem Hauptgetriebe aus. Vor dem Eintrieb des Hauptgetriebes ist eine Schwungscheibe angebracht, die über eine von einem Zugfahrzeug ausgehende Welle angetrieben wird. Der Antrieb des Rotationsförderers wird über einen Kettentrieb von der Kurbelwelle abgenommen.

Das Anbringen des Kurbelwellenantriebes - in Fahrtrichtung gesehen - im vorderen Bereich des Preßkanals bzw. vor dem Preßkolben erfordert eine relativ lange Bauweise des Preßkanals. Die Einfüllöffnung in den Preßkanal liegt - bezogen auf das Hauptgetriebe - weit hinten, wodurch die Antriebswelle des Rotationsförderers ebenfalls weiter vom Hauptantrieb entfernt ist und wodurch ein relativ langer Antriebsstrang erforderlich wird. Es sind somit längere oder mehrere Übertragungsmittel notwendig, die infolge ihrer Länge mehrfach gefürt werden müssen.

Die Verwendung mehrer Kettentriebe ist einesteils aufwendig und erfordert anderenteils einen hohen Wartungsaufwand.

Aus der DE-C-725 500 ist eine Ballenpresse mit einem Kurbelwellenantrieb für den Preßkolben ersichtlich. Der Kurbelwellenantrieb enthält zwei im Abstand zueinander um jeweils eine Achse drehbare Schwingen, die ebenfalls im Abstand zueinander am Preßkolben angeordnet sind, so daß der Preßkolben die Koppel bildet. Die Übertragung der Antriebskraft erfolgt über eine Kurbelstange, die von einem in Fahrtrichtung hinten liegenden, nicht gezeichneten Antrieb nach vorn ragt und direkt an einem Anlenkpunkt einer der Schwingen am Preßkolben angreift. Die bekannte Ballenpresse enthält jedoch keinen Aufsammler sondern ist mit einem oberhalb des Preßkanals angeordneten Aufgaberichter versehen, in den das zu pressende Gut eingeschüttet werden muß. Die bei Ballenpressen mit Aufsammlern bestehenden Probleme der Unterbringung und Anordnung der Antriebe bzw. der Getriebeverbindungen sind in dieser Ballenpresse somit nicht gegeben.

Es ist somit Aufgabe der Erfindung, die genannten Nachteile zu vermeiden und den Antrieb des Rotationförderers, des Preßkolbens sowie die Führung des Preßkolbens so auszubilden, daß eine kompakte und kurze Bauweise der Presse im vorderen Aufgabe- und Preßbereich ermöglicht wird.

Diese Aufgabe wird durch den kennzeichnenden Teil des Hauptanspruches 1 gelöst.

Durch die vorgeschlagene Anlenkung des Kurbelwellenantriebes des Preßkolbens direkt von der Trommelwelle des Rotationsförderers aus dem hinteren Bereich des Preßkolbens, kann die Einfüllöffnung des Zuführkanals weit vorne angebracht werden und der Antrieb des Rotationsförderers vom Hauptgetriebe aus direkt über einen Stirnradtrieb erfolgen. Lange und aufwendige Kettentriebe werden somit vermieden.

Weiterhin wird vorgeschlagen, daß die Ausleger die hintere Führung des Kolbens vornehmen, während der Kolben in seinem vorderen Abschnitt durch drehbeweglich am Kolben befestigte Rollen, die auf Führungsschienen laufen, geführt wird. Dadurch ist es möglich, die Kolbenbewegung der Schwenkbewegung des Schwenkarmes anzupassen, so daß während des Preßvorganges die Preßfläche des Kolbens immer annähernd senkrecht zur Achse des Preßkanals steht.

Durch die zur Fahrtrichtung hin ansteigend ausgebildeten Führungsschienen wird ermöglicht, daß die Preßkanalmitte weiter nach unten zur Mitte der Trommelwelle des Rotationsförderers versetzt werden kann, ohne daß der Kolben bei seinem Rücklauf mit den umlaufenden Förderzinken des Rotationsförderers kollidiert. Daraus resultiert eine Herabsetzung des Schwerpunkt-Angriffspunktes und somit eine Erhöhung der Fahrsicherheit. Ebenfalls begünstigt wird dadurch die Überführung des Gutes durch die Förderzinken in die Einfüllöffnung des Preßkanals.

Die weiterhin vorgeschlagene Ausbildung der Führungsschienen in Form eines - von der Einfüllöffnung aus gesehen - etwa horizontalen und geradlinig Verlaufes, der in einen kreisbogenförmig ansteigenden Verlauf und einem diesem nachgeordneten nach oben weisenden geradlinigen Endabschnitt übergeht, ergibt eine vorteilhafte Anpassung der Kolbenführung im Zusammenwirken mit der Schwenkbewegung des Schwenkarmes.

Weiterhin wird vorgeschlagen, den Kolben mit zusätzlichen vertikalen bzw. horizontalen mit den Führungsschienen zusammenwirkenden Führungsrollen zu versehen, die einesteils eine seitliche Führung des Kolbens gewährleisten und anderenteils ein Abheben des Kolbens von den Führungsschienen nach oben verhindern.

Der Antrieb der Trommelwelle über einen Rädertrieb eines Hauptgetriebes ergibt eine besonders kompakte Bauweise und vermeidet zusätzliche Kettentriebe.

Weitere Vorteile sind anhand eines nachfolgenden Ausführungsbeispieles aufgezeigt und werden näher beschrieben:

Es zeigt:

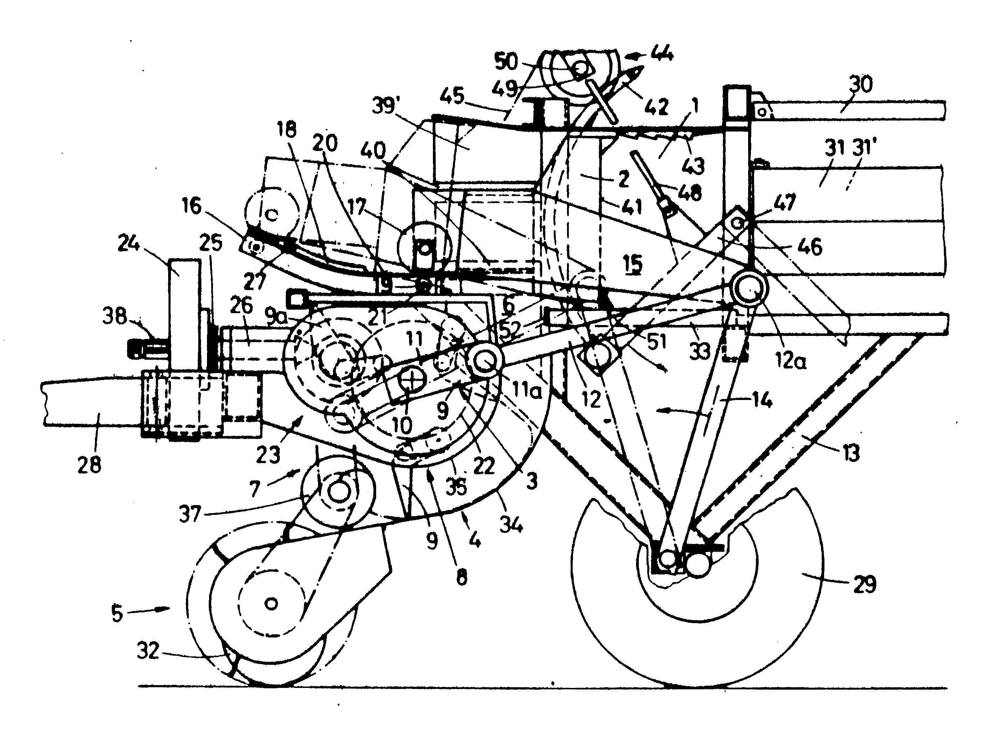

Figur 1  eine vordere Seitenteilansicht einer Ballenpresse mit strichpunktierten Darstellungen von Arbeitsstellungen einzelner Bauelemente.

In der Zeichnung wurde auf die Darstellung eines Zugfahrzeuges verzichtet, welches über eine Schwenkdeichsel 28 mit der Ballenpresse gekoppelt ist.

Die Ballenpresse besteht aus einem Rahmen 13, welcher einen Preßkanal 1 trägt, in dem ein Preßkolben 2 eine Hin- und Herbewegung ausführt. Der Preßkanal 1 sowie der Preßkolben 2 sind im wesentlichen von rechteckigem Querschnitt.

Der Rahmen 13 stützt sich über Räder 29 auf dem Boden ab. Der Preßkanal 1 ist in seinem hinteren Bereich mit Preßschienen 30, 31, 31' versehen, die ein Gegenhalter gegen den entsprechenden Preßdruck des Kolbens 2 bilden und über eine nicht näher aufgezeigte Spannvorrichtung zur Preßkanalmitte gegen die Außenflächen des Ballens drücken.

Im vorderen Bereich ist die Ballenpresse mit einem Aufsammler 5 versehen, der in der Regel durch eine Pick-up gebildet wird. Der Aufsammler 5 ist über eine nicht näher aufgezeigte Schwenkachse am Rahmen 13 der Ballenpresse schwenkbar angebracht und stützt sich über an beiden Seiten angeordnete Tasträder 32 auf dem Boden ab und kann sich somit auftretenden Bodenunebenheiten angleichen.

Im Anschluß an den Aufsammler 5 ist ein nach hinten und oben gerichteter Zuführkanal 4 angebracht, der über eine Einfüllöffnung 6 in die untere Begrenzungswand 33 des Preßkanals 1 mündet.

Der Zuführkanal 4 wird gebildet durch eine Bodenwand 34, eine obere mit Schlitzen versehene Abstreifwand 35 und den Seitenwänden 36. Durch die Schlitze der Abstreifwand 35 ragen Zinken 9, 9a eines Rotationsförderers 8 in den Zuführkanal 4, die das Hochfördern des Gutes bewerkstelligen.

Da in der Regel die Breite des Aufsammlers 5 größer ist als die Breite des Zuführkanals, sind im Anschluß an den Aufsammler 5 Zuführschnecken 37 angebracht, die das aufgenommene Gut jeweils von den äußeren Enden des Aufsammlers 5 zur Mitte hin auf die Breite des Zuführkanals 4 zusammenführen.

Der Antrieb der Trommelwelle 10 des Rotationsförderers 8 erfolgt im gezeigten Beispiel über einen Stirnrad-Rädertrieb 22 eines Hauptgetriebes 23.

Der Antrieb des Hauptgetriebes 23 erfolgt über eine Eingangswelle 26, welcher ein Schwungrad 24 mit einer Sicherheitskupplung 25 vorgeschaltet ist. Über eine nicht näher aufgezeigte und vom Schlepper aus führende Gelenkwelle wird über die Zapfwelle 38 das Schwungrad 24 angetrieben.

Beidseitig ist jeweils auf den Enden der Trommelwelle 10 eine Antriebskurbel 11 drehfest verbunden, an deren freien Enden über ein Drehgelenk 11a jeweils eine Kurbelstange 12 befestigt ist. Über das Drehgelenk 12a sind die Kurbelstangen 12 drehbar mit jeweils einem Schwenkarm 14 und einem Ausleger 15 verbunden.

Die Schwenkarme 14 sind an ihren anderen Enden drehbar am Fahrgestell 13 im Bereich der Drehachse der Räder 29 befestigt. Die Ausleger 15 sind jeweils seitlich mit dem Preßkolben 2 fest verbunden.

Der vordere Teil der Seitenwände 39, 39' des Preßkanals 1 ist mit nach vorne geöffneten Schlitzen 40 versehen, die eine Befestigung der Enden der Ausleger 15 mit dem Preßkolben 2 im Bereich des vorderen Preßkanals ermöglichen.

Der Preßkolben 2 ist in seinem vorderen Bereich beidseitig mit jeweils einer Rolle 17 versehen, die auf teilweise kreisbogenförmig und nach oben gerichteten Führungsschienen 16 aufliegen. Mit mindestens einer seitlichen Führungsrolle 17 wirkt eine achsparallel auf der gegenüberliegenden Seite der Führungsbahn 20 angebrachte Gegenrolle 19 zusammen, deren Achsbolzen 21 über einen am Kolben 2 befestigten Steg getragen wird. Die Gegenrolle 19 verhindert ein Abheben der Rollen 17 von der Führungsbahn 20 und gewährleistet eine exakte Führung des Preßkolbens 2.

Zur seitlichen Führung des Preßkolbens 2 sind im unteren Bereich des Kolbens um etwa vertikale Achsen drehende Führungsrollen 27 angebracht, die gegenüberliegend an einer Führung 18 entlanggeführt werden.

Der Preßkolben 2 ist von seiner Preßfläche 41 aus mit nach vorne ragenden vertikalen Schlitzen versehen, die einerseits den Durchtritt der Bindenadeln 42 beim Bindungsvorgang und andererseits den teilweisen Durchtritt der Zubringerrechen 9a in den Preßkanal 1 ermöglichen.

An der die Einfüllöffnung 6 überstreichenden unteren Kante des Preßkolbens 2 ist quer zur Preßrichtung ein Messer 51 befestigt, das mit einem an der hinteren Kante des Austrittskanals 6 befestigten Gegenmesser 52 zusammenwirkt. Das Messer 51 ist im Bereich der vertikalen Schlitze des Kolbens über die Breite der Schlitze unterbrochen.

Der Preßkanal 1 ist auf seiner Innenseite im vorderen Preßbereich mit mehreren zueinander parallel angeordneten gezackten Rückhalteblechen 43 versehen, die ein Rückschieben des nach hinten verschobenen Preßgutes verhindern.

Derartige Rückhalter 43 können auch seitlich im Preßkanal angebracht sein. Es ist auch möglich, die Rückhalter 43 federbelastet und ausweichbar anzubringen.

Oberhalb des Preßkanals 1 im Bereich der Bewegungsbahn der Bindenadeln 42 ist eine Bindeeinrichtung 44 angebracht, die über einen Kettentrieb 45 von der Trommelwelle 10 des Rotationsförderers angetrieben wird.

Die Bindenadeln 42 sind über die Pendelarme 46, 46' um die Pendelachse 47 am Rahmen 13 verschwenkbar angebracht. An dem Pendelarm 46 ist drehbeweglich eine Strebe 48 befestigt, deren anderes Ende drehbeweglich mit einem Kurbelarm 49 verbunden ist, der drehfest auf der Binderwelle 50 festsitzt. Der Antrieb bzw. das Einkuppeln der Binderwelle 50 erfolgt über eine nicht näher aufgezeigte Kupplungseinrichtung, welche über eine ebenfalls bekannte und nicht näher aufgezeigte Ballenlängen-Meßeinrichtung gesteuert wird.

Die in der Zeichnung dargestellte mit durchgezogenen Linien gezeichnete Stellung der einzelnen Aggregate bezieht sich auf die hintere Totpunktstellung des Kolbens 2, während sich die strichpunktierte Darstellung auf die vordere Totpunktstellung des Kolbens 2 bezieht.

Die Arbeitsweise der Ballenprese ist wie folgt: Das von dem Aufsammler 5 aufgenommene Gut wird über die Schnecken 37 auf die Breite des Zuführkanals 4 zusammengeführt und von in den Kanal 4 ragenden und gesteuerten Zinken 9 nach hinten und oben weitergefördert. Der Preßkolben 2 nimmt zu diesem Zeitpunkt eine Stellung ein, wobei er mit seiner Unterkante die Einfüllöffnung 6 abschließt. Das so nach oben durch die Zinken 9 weitergeförderte Gut erfährt somit gegen die Kolbenunterkante eine Vorpressung. Der nachfolgende Zubringerrechen 9a überführt die durch die beiden Zinken 9 vorgepreßten Gutpackete sowie noch zusätzlich durch den Aufsammler 5 nachgeführtes Gut nach oben durch die Einfüllöffnung 6 in den Preßkanal 1.

Beim Eintauchen bzw. Wirksamwerden der Zubringerzinken 9a hat der Kolben 2 eine vordere Stellung eingenommen und die Einfüllöffnung 6 nach oben freigegeben.

Die Bewegungsbahn der gesteuerten Zinken 9 wurde teilweise strichpunktiert angedeutet, woraus zu entnehmen ist, daß die Zinken 9 bereits im Abstand zu der Einfüllöffnung 6 aus dem Zuführkanal 4 herausgezogen werden. Die nachfolgenden Zubringerzinken beschreiben eine Bewegungsbahn, welche bis zur Einfüllöffnung und teilweise bis in den Bereich des Preßkanals ragt. Beim Eintauchen der Zubringerzinken 9a in den unteren Teil des teilweise geschlitzten Preßkolbens 2 wird das noch an den Zubringerzinken 9a mitgeführte Gut beim Eintritt in die Schlitze abgestreift.

Das durch die Zubringerzinken 9a in den Preßkanal eingebrachte Gutpacket wird durch die Verschiebung des Kolbens 2 über den Kurbelwellenantrieb 3 im Preßkanal nach hinten verschoben. Der Kolben 2 wird hierbei im vorderen Bereich mittels der Rollen 17 auf den gekrümmten Führungsschienen geführt und gewährleistet, daß zum Zeitpunkt des Preßvorganges die Preßfläche 41 des Kolbens eine senkrechte Stellung einnimmt.

Die so nacheinander in den Preßkanal eingebrachten Gutpackete werden nach hinten verschoben und kommen in den Wirkungsbereich der Preßschienen 30, 31, 31', die einen Gegenhalter gegen den Preßdruck des Preßkolbens 2 bilden, wodurch das Gut noch weiter verdichtet wird.

Beim Nachhinten-Verschieben des Kolbens 2 wird über das Messer 51 in Zusammenwirken mit dem Gegenmesser 52 das im Preßkanal befindliche Gut von dem im Zuführkanal 4 nachgeführten Gut getrennt, um Verklemmungen zu verhindern.

Hat der gebildete Ballen eine gewünschte Länge erreicht, so wird über eine Ballenlängen-Meßeinrichtung der Kupplungsvorgang der Binderwelle 50 ausgelöst und der Kurbelarm 49 in Drehbewegung versetzt, wodurch die Bindenadel 42 in die gezeigte obere Stellung überführt werden.

Der Preßkolben 2 nimmt zu diesem Zeitpunkt etwa seine hintere Totpunktstellung ein, wodurch die Bindenadel 42 durch die im Preßkolben befindlichen Schlitze ungehindert das Bindegarn von einem nicht näher aufgezeigten Garnbehälter nach oben zu der Bindeeinrichtung 44 bringen.

Nach Beendigung des Bindevorganges werden die Pendelarme 46, 46' wieder in ihre hintere strichpunktiert gezeigte Lage verschwenkt, wodurch auch die Bindenadeln aus dem Preßkanal 1 ausgefahren werden.

Anschließend erfolgt die Bildung eines neuen Ballens entsprechend dem vorgeschilderten Funktionsablauf. Die nach hinten gerichtete Ballenfläche des neu zu bildenden Ballens liegt auf der vorderen Fläche des bereits gebundenen Ballens auf, wodurch dieser beim weiteren Preßvorgang nach hinten verschoben wird. Beim Erreichen des hinteren Endes des Preßkanals wird der hintere Ballen durch den nachfolgenden Ballen über eine Ablagevorrichtung auf das Feld ausgestoßen.

Die beim Preßvorgang erforderlichen Leistungsspitzen werden durch die Schwungmasse des Schwungrades 24 ausgeglichen.

**Patentansprüche**

1. Ballenpresse mit einem im wesentlichen horizontal und in Fahrtrichtung ausgerichteten Preßkanal (1), in welchem ein Preßkolben (2) über einen Kurbelwellenantrieb (3) hin und herbewegt wird, sowie mit einem Zuführkanal (4), der unterhalb des Preßkanals (1) angeordnet ist und von einem Aufsammler (5) bis zu einer Einfüllöffnung (6) an der Unterseite des Preßkanals führt, wobei in den Zuführkanal (4) Zinken (9) eines Rotationsförderers (8) ragen, die den Preßkanal (1) mit aufeinander folgenden Erntegutladungen des Zuführkanals (4) über die Einfüllöffnung (6) in zeitlicher Abstimmung mit der Hin- und Herbewegung des Preßkolbens (2) versorgen, dadurch gekennzeichnet,

daß die Antriebskurbeln (11) des Kurbelwellenantriebes (3) - bezogen auf die Gestellbreite - seitlich, auf den jeweiligen Enden der Trommelwelle (10) des Rotationsförderers (8) drehfest gelagert sind und die am freien Ende der Antriebskurbeln (11) drehbeweglich gelagerten Kurbelstangen (12) an ihren den Antriebskurbeln entgegengesetzten Enden drehbeweglich mit dem freien Ende jeweils eines am Rahmen (13) der Presse drehbeweglich angelenkten Schwenkarmes (14) und mit jeweils einem mit dem Kolben (2) verbundenen und in Fahrtrichtung gesehen nach hinten ragenden Ausleger (15) verbunden sind.

2. Ballenpresse nach Anspruch 1, dadurch gekennzeichnet,

daß der Preßkolben (2) auf seinem, in Fahrtrichtung gesehen, hinteren Bereich über die Ausleger (15) und den drehbeweglich mit den Auslegern (15) verbundenen Schwenkarmen (14) geführt wird und die Führung in seinem vorderen Bereich durch auf Führungsschienen (16) laufenden und drehbeweglich am Kolben befestigten Rollen (17) erfolgt.

3. Ballenpresse nach Anspruch 2, dadurch gekennzeichnet, daß die Führungsschienen (16) in ihrem, in Fahrtrichtung gesehen, vorderen Bereich zur Fahrtrichtung hin ansteigend ausgebildet sind.

4. Ballenpresse nach Anspruch 3, dadurch gekennzeichnet, daß die Führungsschienen (16) in Fahrtrichtung - von der Einfüllöffnung (6) aus gesehen - zuerst einen etwa horizontalen und gradlinigen Verlauf aufweisen, anschließend in einen kreisbogenförmig ansteigenden Verlauf übergehen und der kreisbogenförmige Teilabschnitt in einen geradlinig und schräg nach oben weisenden Endabschnitt mündet.

5. Ballenpresse nach einem der Ansprüche 2 bis 4, dadurch gekennzeichnet, daß die führungsschienen (16) mit etwa vertikalen Führungen (18) versehen sind, die in den Bereich der äußeren Begrenzung der Rollen (17) ragen und somit, in Fahrtrichtung gesehen, ein seitliches Verschieben des Preßkolbens (2) einschränken.

6. Ballenpresse nach einem der Ansprüche 2 bis 4, dadurch gekennzeichnet,

daß die Rollen (17) auf ihrem Umfang profilförmig ausgebildet sind und mit der Führungsschiene (16) eine seitliche Zwangsführung einnehmen.

7. Ballenpresse nach einem der Ansprüche 2 bis 4, dadurch gekennzeichnet,

daß der Kolben mit um etwa vertikale Achsen drehende Führungsrollen (27) versehen ist, die an der oder den Führungsschiene/n geführt werden zur seitlichen Fixierung des Kolbens (2).

8. Ballenpresse nach Anspruch 5, dadurch gekennzeichnet, daß achsparallel zu den Rollen (17) auf der gegenüberliegenden Seite der Führungsbahn (20) der Führungsschienen (16) Gegenrollen (19) angeordnet sind, deren Achsbolzen (21) mit dem Kolben fest verbunden sind.

9. Ballenpresse nach einem der Ansprüche 7 oder 8, dadurch gekennzeichnet, daß die Rollen (27, 19) bezogen auf ihre Drehachsen radial verstellbar angeordnet sind.

10. Ballenpresse nach einem der vorhergehenden Ansprüche, dadurch gekennzeichnet, daß der Antrieb der Trommelwelle (10) des Rotationsförderers (8) über einen Rädertrieb (22) eines Hauptgetriebes (23) erfolgt und das Hauptgetriebe über eine Antriebswelle unter Zwischenschaltung eines Schwungrades (24) sowie einer Sicherheitskupplung (25) über eine Eingangswelle (26) von einem Zugfahrzeug angetrieben wird.

11. Ballenpresse nach einem der vorhergehenden Ansprüche, dadurch gekennzeichnet, daß sämtliche Antriebe der Förder-, Preß- und Bindeeinrichtungen von dem Hauptgetriebe (23) abgenommen werden.

**Claims**

1. A baling press, having a substantially horizontal compression duct (1), oriented in the direction of travel, in which a compaction- piston (2) is reciprocable

   by a crankshaft drive (3), also having a feed duct (4) located underneath the compression duct (1) and leading from a collector (5) to an inlet opening (6) on the underside of the compression duct, tines (9) of a rotatable conveyor (8) projecting into the feed duct (4), said tines (9) supplying the compression duct (1) with successive crop material loads from the feed duct (4), through the inlet opening (6) in timed coordination with the to-and-fro movement of the compaction- piston (2), characterised in that

   the drive cranks (11) of the crankshaft drive (3) - in relation to the width of the machine frame - are non-rotatably mounted laterally, on the respective ends of the drum shaft (10) of the rotatable conveyor (8), and that crank rods (12) rotatably movably mounted on the free end of the drive cranks (11) are connected, at their ends remote from the drive cranks, non-rotatably with the free end of a respective swing arm (14) rotatably movably articulated on the frame (13) of the press, and with a respective boom (15) connected to the compaction-piston (2) and, seen in the direction of travel, projecting rearwardly.

2. A baling press according to Claim 1, characterised in that the compaction- piston (2), in its rear region seen in the direction of travel, is guided by the booms (15) and the rotatably displaceable swing arms (14) rotatably movably connected with the booms (15), and guidance is effected in its forward region by rollers (17) rotably movably mounted on the piston, said rollers running on guide rails (16).

3. A baling press according to Claims 2, characterised in that the guide rails (16), in their forward region seen in the direction of travel, are inclined upwardly in the direction of travel.

4. A baling press according to Claim 3, characterised in that the guide rails (16), seen in the direction of travel from the inlet opening (6), at first follow a roughly horizontal and rectilinear configuration, then merge into an arcuately-rising configuration, and that the arcuate section then opens into a rectilinear obliquely upwardly-facing section.

5. A baling press according to one of Claims 2 to 4, characterised in that the guide rails (16) are provided with approximately vertical guides (18) which project into the vicinity of the external limits of the rollers and restrict lateral displacements of the compaction-piston (2).

6. A baling press according to one of Claims 2 to 4, characterised in that the rollers (17) are profiled on their circumference, and are subject to constrained lateral guidance with the guide rail (16).

7. A baling press according to one of Claims 2 to 4, characterised in that the piston is provided with guide rollers (27) rotating around approximately vertical axes, and which are guided on the guide rail or guide rails in order to secure the piston (2) laterally.

8. A baling press according to Claim 5, characterised in that there are located axially parallel with the rollers (17) on the opposing side of the guide track (20) of the guide rails (16) counterrollers (19) whose axle bolts (21) are fixedly secured to the piston.

9. A baling press according to one of Claims 7 or 8, characterised in that the rollers (27, 19) are radially displaceable relative to their axes of rotation.

10. A baling press according to one of the foregoing Claims, characterised in that the drive for the drum shaft (10) of the rotary conveyor (8) is effected via a gear drive (22) of a main drive system (23), and that the main drive is driven via a drive shaft and an input shaft (26) from a towing vehicle, with an interposed flywheel (24) and a safety clutch (25).

11. A baling press according to one of the foregoing Claims, characterised in that all drives for conveyor-, compaction- and binding-devices are derived from the main drive system (23).

**Revendications**

1. Presse à balles comprenant un conduit presseur (1) s'étendant sensiblement horizontalement et dans le sens du déplacement et dans lequel un piston presseur (2) est amené à se déplacer selon un mouvement de va-et-vient, par l'intermédiaire d'un entraînement à arbremanivelle (3), ainsi qu'un conduit d'amenée (4) qui est disposé en-dessous du conduit presseur (1) et s'étend à partir d'un collecteur (5) jusqu'à un orifice d'introduction (6) sur la face inférieure du conduit presseur, des pointes (9) d'un transporteur rotatif (8) s'étendant dans le conduit d'amenée, qui alimentent le conduit presseur (1) en charges de produits de récolte successives du conduit d'amenée (4) à travers l'orifice d'introduction (6), en accord temporel avec le mouvement de va-et-vient du piston presseur (2), caractérisé

en ce que les manivelles de commande (11) de l'entraînement à arbre-manivelle (3) sont logées, par rapport à la largeur du chassis, latéralement sur les extrémités respectives de l'arbre tambour (10) du transporteur rotatif (8), de façon solidaire en rotation, et que les tiges de manivelle (12) qui sont montées libres en rotation à l'extrémité libre des manivelles de commande (11), sont reliées par leurs extrémités opposées aux manivelles de commande, de façon mobile en rotation, chacune à l'extrémité libre d'un bras pivotant articulé de façon mobile en rotation au cadre (13) de la presse et à une console (15) reliée au piston (2) et faisant saillie vers l'arrière dans une vue dans le sens du déplacement.

2. Presse à balles selon la revendication 1, caractérisée en ce que le piston presseur (2) est guidé dans sa partie arrière dans le sens du déplacement, par les consoles (15) et les bras de pivotement (14) reliés de façon mobile en rotation aux consoles (15) et que le guidage dans sa partie avant s'effectue à l'aide de rouleaux (17), qui se déplacent sur des rails de guidage (16) et sont fixés de façon mobile en rotation au piston.

3. Presse à balles selon la revendication 2, caractérisé en ce que les rails de guidage (16) sont conformés dans leur portion avant dans le sens de déplacement de façon à s'élever dans le sens du déplacement.

4. Presse à balles selon la revendication 3, caractérisée en ce que les rails de guidage (16) présentent dans le sens du déplacement, à partir de l'orifice d'introduction (6), tout d'abord une allure approximativement horizontale et rectiligne, adoptent ensuite une allure ascendante selon un arc de cercle, et en ce que la portion en forme d'un arc de cercle se termine par une portion d'extrémité rectiligne et s'étendant obliquement vers le haut.

5. Presse à balles selon l'une des revendications 2 à 4, caractérisée en ce que les rails de guidage (16) sont pourvus de guidages sensiblement verticaux (18), qui s'étendent dans la zone de la limitation extérieure des rouleaux (17) et limitent ainsi, dans le sens du déplacement, un déplacement latéral du piston presseur (2).

6. Presse à balles selon l'une des revendications 2 à 4, caractérisée en ce que les rouleaux (17) présentent à leur périphérie un profil et procurent, avec le rail de guidage (16), un guidage latéral forcé.

7. Presse à balles selon l'une des revendications 2 à 4, caractérisée en ce que le piston est pourvu de rouleaux de guidage (27) tournant autour d'axes sensiblement verticaux, qui sont guidés au ou aux rail(s) de guidage pour assurer une fixation latérale du piston (2).

8. Presse à balles selon la revendication 5, caractérisée en ce que des contre-rouleaux (19) dans les goupilles d'axe (21) sont reliés de façon fixe au piston sont disposées de façon que leurs axes soient parallèles aux axes des rouleaux (17) au côté opposé de la voie de guidage (20) des rails de guidage (16).

9. Presse à balles selon l'une des revendications 7 ou 8, caractérisée en ce que les rouleaux (27, 19), sont montés radialement déplaçables, par rapport à leurs axes de rotation.

10. Presse à balles selon l'une des revendications précédentes, caractérisée en ce que l'entraînement de l'arbre tambour (10) du transporteur rotatif (8) s'effectue à l'aide d'un entraînement à roues (22) d'un engrenage principal (23) et que l'engrenage principal est entraîné par l'intermédiaire d'un arbre d'entraînement, avec interposition d'une roue volante (24), ainsi que d'un accouplement de sécurité (25), au moyen d'un arbre d'entrée (26), par un véhicule tracteur.

11. Presse à balles selon l'une des deux revendications précédentes, caractérisée en ce que tous les entraînements des installations de transport, de compression et lieuses sont prélevées de l'engrenage principal (23).